(19) **Europäisches Patentamt**

**European Patent Office**

**Office européen des brevets**

(11) Numéro de publication: **0 405 679 A1**

(12) **DEMANDE DE BREVET EUROPEEN**

(21) Numéro de dépôt: **90201663.3**

(22) Date de dépôt: **25.06.90**

(51) Int. Cl.5: **H04N 11/08, H04N 7/00**

(30) Priorité: **30.06.89 FR 8908797**

(43) Date de publication de la demande:
**02.01.91 Bulletin 91/01**

(84) Etats contractants désignés:
**DE FR GB IT**

(71) Demandeur: **LA RADIOTECHNIQUE**
**PORTENSEIGNE**
**51, Rue Carnot**
**F-92159 Suresnes(FR)**

㊹ **FR**

Demandeur: **N.V. Philips'**
**Gloeilampenfabrieken**
**Groenewoudseweg 1**
**NL-5621 BA Eindhoven(NL)**

㊹ **DE**

(72) Inventeur: **Hajj Chehade Mohamed, Societé**
**Civile S.P.I.D.**
**209 rue de l'Université**
**F-75007 Paris(FR)**
Inventeur: **Simon, Henry, Societé Civile**
**S.P.I.D.**
**209 rue de l'Université**
**F-75007 Paris(FR)**
Inventeur: **Cotty, Michel, Societé Civile**
**S.P.I.D.**
**209 rue de l'Université**
**F-75007 Paris(FR)**
Inventeur: **Potier, Loic, Societé Civile S.P.I.D.**
**209 rue de l'Université**
**F-75007 Paris(FR)**

(74) Mandataire: **Caron, Jean et al**
**Société Civile S.P.I.D. 156, Boulevard**
**Haussmann**
**F-75008 Paris(FR)**

(54) **Dispositif d'égalisation autoadaptive pour des échantillons numériques codés en duobinaire.**

(57) Dispositif d'égalisation autoadaptative pour le traitement d'échantillons numériques codés en duobinaire, comprenant un filtre numérique transversal (27), un circuit d'estimation de l'erreur en sortie du filtre (36), et un automate (16,38-45,21) pour réaliser un processus d'autoadaptation des coefficients du filtre numérique.

Selon l'invention, le dispositif est appliqué dans un système utilisant la norme D2-MAC, il comporte un élément de décision (16,36) pour stopper le processus d'autoadaptation des coefficients lorsque la valeur des échantillons en sortie du dispositif est comprise dans une des fenêtres d'un ensemble de fenêtres prédéterminées, et chacun des coefficients du filtre (27) est défini par un nombre de bits limité à huit ou neuf.

Application: Décodeurs pour la réception de télévision en norme D2-MAC.

**EP 0 405 679 A1**

**FIG.5**

# DISPOSITIF D'ÉGALISATION AUTOADAPTATIVE POUR DES ÉCHANTILLONS NUMÉRIQUES CODÉS EN DUOBINAIRE.

La présente invention concerne un dispositif d'égalisation autoadaptative pour le traitement d'échantillons numériques codés par exemple en duobinaire et transmis par un canal quasi-stationnaire, dispositif comprenant un filtre numérique transversal, un circuit d'estimation de l'erreur en sortie du filtre, et un automate pour réaliser un processus d'autoadaptation des coefficients du filtre numérique.

Un tel dispositif est utilisé dans des systèmes de communications numériques.

Dans ces systèmes, une suite de symboles émise par une source est transmise à travers un canal. Le canal modifie la forme des impulsions appliquées à son entrée et en augmente la durée. Les symboles successifs peuvent donc se chevaucher. Ce phénomène de chevauchement est appelé "interférence intersymbole". Il induit une perturbation de chaque symbole par les symboles voisins et la restitution du message par un échantillonneur et un détecteur à seuils risque d'être erronée. L'interférence intersymbole apparaissant dans les systèmes de transmission a différentes causes, parmi lesquelles:
- en liaison hertzienne, elle est causée par la présence de trajets multiples. Le nombre de trajets secondaires (ou réfléchis), leurs retards et leurs amplitudes relatives varient dans le temps ; ce canal ne peut donc être caractérisé qu'à un instant donné ; il est non stationnaire.
- sur un réseau câblé ou une distribution collective, les trajets multiples peuvent souvent être modellisés par un trajet double. Dans le cas d'un modèle à deux trajets (écho simple), la distorsion résultante est équivalente à un filtrage linéaire, les paramètres ne sont pas modifiés rapidement en cours du temps et ce canal est dit stationnaire.
- en outre, des interférences intersymboles sont susceptibles d'être provoquées dans les récepteurs mêmes par leurs propres circuits de filtrage et de démodulation et notamment par les imperfections de la démodulation dans le cas d'une modulation d'amplitude à bande latérale réduite.

On a constaté qu'un décodeur de Viterbi est moins sensible à l'interférence intersymbole qu'un décodeur à seuils, mais ses performances ne sont pourtant pas tout à fait suffisantes.

L'article d'Adam LENDER intitulé "Decision Directed Digital Adaptive Equalization Technique for High-Speed Data Transmission" dans la publication : "IEEE Transactions on Communication Technology", vol.COM-18, n° 5, Oct.1970, pages 625-632, décrit un égaliseur qui est conçu pour un signal duobinaire, avec une quantification de 10 bits, et il utilise l'algorithme du gradient stochastique. La fréquence du signal est de 4600 bauds. On a constaté que la convergence de l'algorithme est compromise si l'on cherche à diminuer le nombre de bits de quantification.

L'invention est basée sur l'idée d'utiliser un égaliseur autoadaptatif dans un décodeur de télévision selon la norme D2-MAC et la constatation que, moyennant certaines dispositions particulières concernant l'initialisation et l'arrêt du processus d'autoadaptation, il est possible de réduire le nombre de bits de quantification des coefficients du filtre sans pour autant entrainer de défauts de convergence.

Afin de pouvoir diminuer ce nombre, tout en préservant la fiabilité de la convergence, le dispositif selon l'invention comporte un élément de décision pour stopper le processus d'ajustement répétitif des coefficients lorsque la valeur des échantillons en sortie du dispositif est comprise dans une des fenêtres d'un ensemble de fenêtres prédéterminées, et chacun des coefficients du filtre est défini par un nombre de bits limité à huit ou neuf.

La constatation qu'un seul échantillon est compris dans une desdites fenêtres est suffisante pour stopper le processus d'autoadaptation des coefficients. Ainsi le dispositif est le plus simple possible, et néanmoins son efficacité n'est pas diminuée.

L'ensemble de fenêres se compose avantageusement de trois fenêtres, l'une encadrant le niveau normal d'un échantillon zéro, une autre encadrant le niveau normal d'un échantillon haut, et la troisième encadrant le niveau normal d'un échantillon bas.

En outre, le dispositif comporte des moyens pour activer le processus d'autoadaptation seulement pendant les périodes de signal numérique présentes au début de chaque ligne d'image, et pour court-circuiter le filtre pendant les périodes de multiplex temporel qui suivent les périodes de signal duobinaire.

Le filtre est avantageusement un filtre à huit coefficients, dissymétrique, et dont le coefficient principal est le troisième.

Pour faciliter la convergence du processus, le dispositif est muni de moyens pour, lors de l'initialisation, mettre le coefficient principal du filtre à un, et les autres à zéro.

Au cours de l'autoadaptation, l'automate additionne ou soustrait à chacun des coefficients du filtre une quantité égale à une puissance négative de deux. Ceci peut être réalisé de façon particulièrement simple lorsque cet automate comporte à cet effet, pour chacun des coefficients à adapter, un compteur dont la capacité exprimée en bits est égale au nombre de bits de quantification des coefficients du filtre, et en ce que les additions/soustractions sont réalisées en incrémentant/décrémentant les chiffres de comptage du compteur.

Dans un mode de réalisation simple le susdit élément de décision est constitué à partir d'une mémoire morte dite PROM à laquelle le signal filtré numérique est fourni en tant qu'adresse, et chacune des adresses possibles contient une valeur numérique exprimant la décision correspondante.

Du fait de la diminution du nombre de bits et de la simplification de tous les circuits associés qui en résulte, le dispositif complet d'égalisation peut être réalisé sous une forme intégrée.

La description qui va suivre, en regard des dessins annexés décrivant des exemples non limitatifs fera bien comprendre comment l'invention peut être réalisée.

La figure 1 illustre un système dans lequel l'invention est utilisée.

La figure 2 est un schéma général d'un égaliseur.

La figure 3 représente un "diagramme de l'oeil".

La figure 4 est un schéma de filtre transversal utilisable dans le dispositif selon l'invention.

La figure 5 est un schéma synoptique d'un dispositif d'égalisation complet selon l'invention.

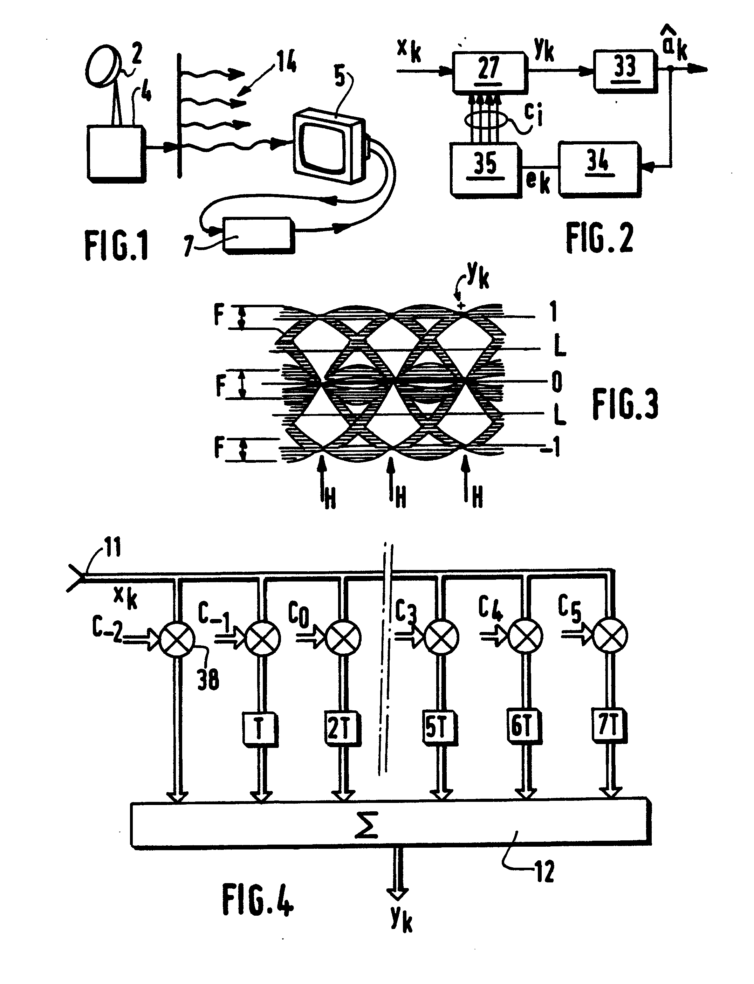

Le système de la figure 1 est décrit à l'aide de signaux numériques codés en duobinaire, mais il est évident que l'invention est applicable aussi avec n'importe quel signal codé à plusieurs niveaux. Le signal D2-MAC/paquet reçu sur une antenne 2 est retransmis en modulation d'amplitude (modulation réalisée dans un centre de distribution 4) par un réseau de distribution par câble 14, vers un ou plusieurs téléviseurs dont un est représenté en 5. On utilise une modulation d'amplitude à bande latérale réduite qui offre l'avantage d'occuper moins de place, pour la même bande passante du signal modulant, que la modulation d'amplitude à double bande. Malheureusement, elle peut faire apparaître de l'interférence intersymbole si certains paramètres de la chaîne de transmission et de la démodulation ne respectent pas les principes théoriques.

Pour le type de décodage envisagé ici, le signal D2-MAC/paquet est récupéré en bande de base sur la prise péritélévision du récepteur 5 à modulation d'amplitude et à bande latérale réduite (sortie dite vidéocomposite). Les signaux sont traités, pour y être décodés, dans l'élément 7 et les signaux d'image décodés, avec les signaux de son et les signaux de synchronisation sont renvoyés sur les bornes de la susdite prise de péritélévision. Le signal à corriger par l'égaliseur de l'invention est la partie duobinaire du multiplex temporel du signal D2-MAC/paquet. L'égaliseur est donc situé dans l'élément 7 en amont du circuit de décodage des données duobinaires; il est précédé d'un convertisseur analogique/numérique.

Sur le schéma du dispositif de correction de la figure 2, le signal d'entrée $x_k$ (k est l'indice temporel de l'échantillon) est amené à un filtre numérique transversal 27. Le signal filtré $y_k$ qui en sort est amené à un comparateur à seuils 33 dans lequel le signal $y_k$ est comparé à deux seuils L placés à mi-amplitude de chacune des polarités du "diagramme de l'oeil" du signal reçu (fig 3), et le résultat de la comparaison permet de décider de la valeur normalisée (basse, nulle, haute) à attribuer au signal. Le signal "décidé" $â_k$ est le signal utile. Il est amené à un élément 34 qui calcule l'erreur, appelée $e_k$, pour chaque échantillon. Cette erreur est la différence entre le signal "décidé" qui a une amplitude normalisée, et le signal filtré $y_k$. L'erreur $e_k$ est fournie à un automate 35. Ce dernier adapte les coefficients du filtre dans le but de diminuer l'erreur quadratique moyenne. Il fournit au filtre les N coefficients $c_i$ adaptés.

Plusieurs types d'application d'un tel schéma existent pour réaliser un filtrage adaptatif au sens général, et plus particulièrement un filtrage auto-adaptatif, ou une annulation d'écho.

Pour supprimer l'interférence intersymbole, l'erreur quadratique moyenne entre le symbole "décidé" et le symbole réellement émis doit devenir minimale.

Dans un filtrage adaptatif, la séquence de symboles est connue et le récepteur dispose de la séquence, qui est comparée au signal décidé : il n'y a pas d'estimation à faire sur le signal reçu. Ce dispositif fonctionne sur de fortes distorsions, mais la synchronisation est délicate à réaliser.

Dans un filtrage auto-adaptatif, le signal reçu est estimé. Cette estimation sert de signal de référence. Ce dispositif fonctionne sur toute information. Il h'y a pas de mémorisation de séquence. Habituellement, les algorithmes correspondants prévoient une phase d'apprentissage.

Dans le cas d'un annuleur d'écho, il est nécessaire que le perturbateur soit connu: il est soustrait du signal reçu pour obtenir le signal émis. Un tel dispositif est réservé aux réseaux bi-directionnels de télécommunication.

Dans la présente application, le perturbateur est inconnu; le troisième cas est donc exclu. Le premier cas nécessite d'avoir en permanence la mémorisation des informations de la séquence dans le récepteur. C'est donc le filtrage auto-adaptatif qui est ici le plus approprié. En outre, le présent système de transmission n'introduit pas de fortes distorsions, et la phase d'apprentissage n'est même pas nécesssaire.

Pour le processus d'autoadaptation, deux critères principaux d'optimisation peuvent être utilisés, à savoir : ou bien obtenir le minimum de la distorsion maximale, ou bien obtenir le minimum de l'erreur quadratique moyenne.

De nombreux algorithmes existent pour répondre à ces critères. Les plus utilisés sont :
- le forçage à zéro utilisé pour le minimum de la distorsion maximale
- l'algorithme du gradient stochastique pour la minimisation de l'erreur quadratique moyenne.

De complexité équivalente, l'algorithme du gradient présente de meilleures performances: c'est cet algorithme qui a été choisi.

Soit un filtre transversal non récursif à N coefficient $C_0,...C_{N-1}$; les données d'entrée, ainsi que les coefficients peuvent se mettre sous la forme :

$$X_k = \begin{vmatrix} x_k \\ x_{k-1} \\ . \\ . \\ . \\ x_{k-N+1} \end{vmatrix} \quad \text{et } C = \begin{vmatrix} c_0 \\ c_1 \\ . \\ . \\ . \\ c_{N-1} \end{vmatrix}$$

Le signal en sortie du filtre

$$y_k = \sum_{i=o}^{N-1} c_i x_{k-i}$$

peut s'écrire: $y_k = C^T.X_k$

où $C^T$ désigne le vecteur transposé de C.

L'erreur est représentée par l'écart entre $y_k$ et $a_k$ :

$e_k = C^T.X_k - a_k$

Il s'agit de minimiser l'erreur quadratique moyenne J(C):

$J(C) = E(|e_k|^2) = E(|C^T X_k - a_k|^2)$     (1)

(E est l'espérance mathématique)

qui représente une moyenne d'ensemble, proche de la moyenne temporelle :

$$J_k(C) = \frac{1}{k} \cdot \sum_{j=1}^{k} e_k^2 \qquad\qquad (2)$$

Lorsque le filtre s'est stabilisé en régime permanent, l'équation (1) peut s'écrire encore :

$J(C) = C^T.G.C. - 2C^T.V + a^2$

avec:

$a^2 = E(|a_k|^2)$

$G = E(X_k.X_k^T)$

$V = E(X_k.a_k)$

Le gradient de J(c) par rapport au vecteur C est donné par:

$\partial J/\partial C = 2(GC - V)$

Le vecteur optimal est défini lorsque le gradient est nul,

donc : $C_{opt} = G^{-1}.V$

On peut montrer que la matrice G est non singulière et que le vecteur $C_{opt}$ est unique.

Pour converger vers $C_{opt}$, l'algorithme du gradient déterministe utilise un procédé récursif pour modifier le filtre après chaque estimation :

$C(k+1) = C(k) - \frac{\alpha}{2}\frac{\partial J}{\partial C_k} = C(k) - \alpha.E(e_k X_k)$ $\alpha$ est une constante positive, qu'on nomme incrément de l'algorithme.\

L'égaliseur fournit à l'organe de décision un échantillon $y_k$ représentant la meilleure estimation du symbole émis au sens de l'erreur quadratique moyenne minimale. La valeur délivrée par l'organe de décision est notée $\hat{a}_k$. Comme on ne dispose pas de la vraie valeur de $a_k$, mais seulement de $\hat{a}_k$, c'est cette dernière valeur qui est utilisée en pratique pour réaliser l'algorithme.

En pratique, le calcul de $E(e_k X_k)$ qui fait intervenir une espérance mathématique s'avère délicat; si la moyenne d'ensemble (1) se rapproche de la moyenne temporelle (2), donc si k est grand, l'estimation du gradient donnée par la valeur instantanée $e_k.x_k$ est possible et les coefficients sont adaptés par la relation :

$$c_i(k+1) = c_i(k) - \alpha.e_k.x_{k-i} \qquad (3)$$

La récursivité de l'algorithme du gradient stochastique réalise à la fois moyennage et minimisation.

Le procédé comporte deux phases :
- la phase de filtrage proprement dite, à l'issue de laquelle on obtient une erreur d'estimation $e_k$ liée à l'état actuel C du filtre.
- la phase d'adaptation contrôlée par $e_k$, par $x_k$, ainsi que par l'incrément $\alpha$.

Les avantages de cet algorithme sont les suivants :
- il y a peu de calculs (2N multiplications, N additions pour le filtrage, comme pour l'adaptation), donc la réalisation n'est pas complexe.
- des versions simplifiées de cet algorithme peuvent encore réduire le coût du système (version "signe" à pas $\alpha$ constant).

C'est ainsi qu'on a choisi içi une version simplifiée de l'équation (3) :

$$c_i(k+1) = c_i(k) - \alpha.\text{sgn}\, e_k.\text{sgn}\, x_{k-i} \qquad (4)$$

(sgn = "signe de")

La réalisation de cette équation est possible en utilisant des "OU exclusif" pour la multiplication des deux signes.

Les problèmes dûs au fait qu'on ne dispose que d'estimations de l'erreur et ceux dûs aux simplifications peuvent être évités en choisissant un pas $\alpha$ assurant un compromis entre la finesse de convergence (valeur de l'erreur quadratique moyenne résiduelle) et la vitesse de convergence. Dans la présente application, la vitesse de convergence n'a pas une grande importance, et il suffit de choisir un pas $\alpha$ assez petit pour assurer la convergence. Néanmoins, étant donné que l'égaliseur est destiné à équiper du matériel de type "grand public", il ne faut pas non plus opter pour un pas $\alpha$ trop petit, car la quantification des coefficients du filtre (c'est-à-dire le nombre de valeurs discrètes différentes qu'ils peuvent prendre) est directement égale à l'inverse du pas, et le coût des multiplications croît, quand $\alpha$ diminue.

Les essais ont montré qu'un pas $\alpha \leq 1/2^7 \simeq 0,008$, pour un filtre à huit coefficients, assurait la convergence et donnait des résultats suffisants. Le filtre auto-adaptatif préféré a les caractéristiques suivantes :
- c'est un filtre transversal ou linéaire non récursif à huit coefficients répartis en $C_{-2}, C_{-1}, C_0, C_1, C_2, C_3, C_4, C_5$; $C_0$ est le coefficient principal, $C_{-2}$ et $C_{-1}$ servent à corriger les perturbations de démodulation et $C_1$ à $C_5$ servent à corriger ces mêmes perturbations ainsi que les échos dont le retard est de 50 à 500ns.
- il est auto-adaptable sur le critère de l'erreur quadratique moyenne minimale et à l'aide de l'algorithme du gradient déterministe signé.
- le pas d'incrémentation est $\alpha \simeq 0,008$ et la quantification des coefficients est de 8 bits y compris le signe.

Sur le schéma de filtre numérique transversal de la figure 4 les signaux sont indiqués avec les mêmes références que dans l'exposé théorique ci-dessus. Le signal $x_k$ à l'entrée 11 du filtre est amené à un groupe de multiplieurs 38 en parallèle (les multiplieurs sont tous identiques et pour alléger la figure, seule la référence du multiplieur le plus à gauche est indiquée). Chacun d'eux reçoit un coefficient multiplicateur respectivement $C_{-2}, C_{-1}, C_0, C_1, C_2, C_3, C_4, C_5$ (de la gauche vers la droite) en provenance de l'élément 35 de la figure 2. Le signal sortant de chaque multiplieur est amené à un sommateur 12, à chaque fois à travers un circuit retardateur T,2T,3T,... ..7T, respectivement de la gauche vers la droite (les signes T,2T,3T,...7T représentent à la fois les références des éléments et les durées de retardement). Le sommateur 12 fournit en sortie le signal $y_k$.

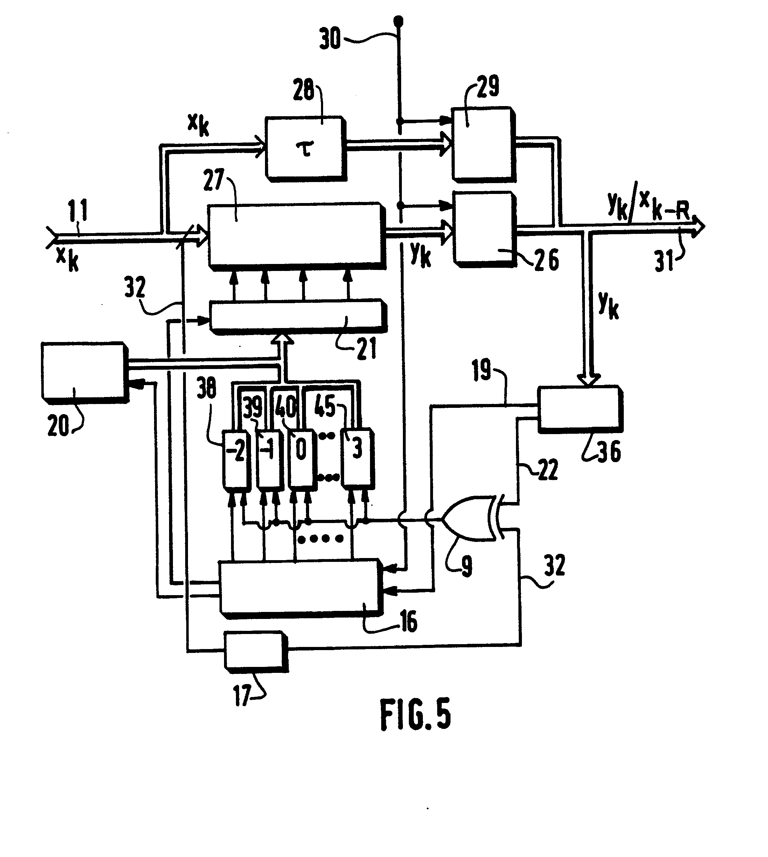

Dans le dispositif complet représenté par la figure 5, le signal duobinaire est amené sous forme numérique sur un bus 11 à huit fils. Le signal $x_k$ est exprimé, non pas en binaire naturel, mais en binaire signé (complément à deux): le bus 11 comporte donc sept fils de valeur et un fil de signe. Le signal $x_k$ est amené au filtre numérique 27 qui est constitué selon le schéma de la figure 4. Son signal de sortie $y_k$ traverse un élément 26 qui est un registre commutateur. Le signal d'entrée $x_k$ est également amené à un élément 28 de retardement destiné à fournir un signal identique au signal d'entrée mais retardé du nombre R de périodes d'horloge voulu pour être en synchronisme avec le signal issu du filtre 27. Ce signal retardé ($x_{k-R}$) est fourni à un registre 29. Le signal de sortie 31 est prélevé à volonté dans le registre 29 ($x_{k-R}$ non filtré) ou dans le registre 26 ($y_k$ filtré). Ce signal est amené à un élément 36 qui détermine directement le signe de l'erreur sgn($e_k$). Il n'utilise pas de comparateur à seuils à proprement parler (le comparateur 33 avait été mentionné plus haut pour simplifier les explications), mais contient une mémoire morte (PROM) dont le rôle sera expliqué maintenant. Pour une valeur déterminée du signal $y_k$, il est facile de déterminer à la fois $\hat{a}_k$ et $e_k$. Pour illustrer cela, une valeur $y_k$ est indiquée à titre d'exemple sur la figure 3. Sa valeur est supérieure au seuil L le plus haut: donc $\hat{a}_k$ vaut 1. Comme la valeur $y_k$ est supérieure à $\hat{a}_k$, le signe de

EP 0 405 679 A1

l'erreur est positif. Pour n'importe quelle valeur de $y_k$ les mêmes déductions simples peuvent être faites. En pratique, la valeur de $y_k$ est introduite dans la mémoire PROM en tant qu'adresse, et à chaque adresse a été inscrite à l'avance la valeur $sgn(e_k)$ qui correspond. Cette valeur est délivrée sur un fil 22. Ce fil 22 ainsi que le fil de signe 32 portant le signe de $x_k$ (et qui est prélevé sur le bus 11) sont connectés aux entrées d'une porte OU exclusif 9. Le fil 32 traverse en outre un élément de retardement 17, de façon que le signe amené à la porte 9 devienne celui de l'échantillon $x_{k-i}$, au lieu de celui de l'échantillon $x_k$. En choisissant par exemple l'état UN pour désigner le signe plus et l'état ZERO pour désigner le signe moins, il est aisé de vérifier, en passant en revue tous les cas possibles (tableau de vérité), que la porte 9 fournit en sortie le signal: $-sgn(e_k).sgn(x_{k-i})$.

Pour le traitement des 8 coefficients du filtre, il faut une configuration qui permette de les mémoriser et de les adapter: on utilise dans le dispositif d'Adam LENDER déjà citée un stockage série, à l'aide d'une mémoire rapide, ou de registres à décalage. Bien que cette solution offre un gain de place, elle permet difficilement de réaliser la lecture, l'adaptation et l'écriture en un seul coup d'horloge pour chaque coefficient, ce qui ralentit le temps d'adaptation et exige des temps d'accès mémoire très courts (<25ns).

C'est une configuration différente avec stockage parallèle qui a été choisie: pour réaliser la multiplication par $\alpha$, chaque coefficient du filtre est représenté respectivement par le chiffre de comptage d'un compteur 38,39,40,.....,45, chiffre qui est mémorisé par chaque compteur et transféré au filtre 27 via un registre 21. Les compteurs qui correspondent aux coefficients à ajuster comptent en binaire signé avec une capacité de $\mp 2^7$, soit $\mp 128$, c'est à dire que leur capacité exprimée en bits est égale au nombre de bits de quantification des coefficients du filtre. Ainsi l'incrémentation ou la décrémentation d'une unité représente une variation d'un cent vingt huitième de la valeur maximale, ce qui revient donc à ajouter ou retrancher $\alpha$. En appliquant une telle variation dans le sens correspondant au produit des signes de $x_{k-i}$ et $e_k$, on réalise l'opération:

$$-\alpha.sgn(e_k).\ sgn(x_{k-i})$$

de l'équation 4. A cet effet le signal de sortie de la porte 9 est amené aux compteurs pour commander le comptage ou le décomptage selon que ledit signal de sortie est à UN ou à ZERO.

Certains décodeurs de signal D2-MAC/paquet disponibles dans le commerce travaillent avec une fréquence d'échantillons de 20,25 Mhz alors que le rythme de bits de la période duobinaire en D2-MAC/paquet est de 10,125 Mhz: lorsqu'on utilise un signal fourni par un tel décodeur, on n'en traite qu'un échantillon sur deux dans le présent dispositif. A cet effet, un signal d'horloge H à 10,125 Mhz, en phase avec les ventres du diagramme de l'oeil (figure 3), qui est engendré à partir du susdit décodeur, est amené à tous les éléments du présent dispositif et notamment à l'élément 36 pour y déclencher la lecture de $sgn-(e_k)$. Il est amené aussi à un organe de gestion 16 qui est relié aux compteurs et au registre 21. Cet organe sert notamment à désigner le compteur qui doit fonctionner à un instant donné, au moyen de l'entrée d'autorisation ("enable") de ce dernier. En effet les compteurs fonctionnent chacun à leur tour au rythme de l'horloge, de façon à ce que la valeur de i dans $x_{k-i}$ soit à chaque fois la bonne. Après huit périodes d'horloge, les valeurs de comptage sont toutes établies et l'organe 16 déclenche alors la fourniture des valeurs des coefficients par le registre 21 au filtre 27. A ce moment, l'organe de gestion 16 attend encore huit périodes d'horloge, afin que l'effet de la modification des coefficients soit complet en sortie du filtre puis en sortie de l'élément 36 (le temps de transit total est d'environ huit périodes d'horloge), et il déclenche alors un nouveau cycle d'autoadaptation des coefficients, le cas échéant.

L'ensemble des éléments ou organes 16,38-45,21 constitue ainsi un automate pour réaliser le processus d'autoadaptation des coefficients du filtre.

Sur la figure 3 sont indiquées des fenêtres F qui constituent un ensemble composé de trois fenêtres F, l'une encadrant le niveau normal d'un échantillon zéro, une autre encadrant le niveau normal d'un échantillon haut (1), et la troisième encadrant le niveau normal d'un échantillon bas (-1). Il est clair que pour chaque valeur de $y_k$, le fait qu'elle soit ou non comprise dans une des fenêtres F ne dépend que de ladite valeur de $y_k$. Ainsi que cela a été expliqué plus haut, l'élément 36 contient dans une mémoire PROM, pour chaque adresse correspondant à une valeur de $y_k$, le signe de $e_k$: en plus, un code est enregistré à chaque adresse indiquant si la valeur de $y_k$ est comprise dans une des fenêtres de l'ensemble de fenêtres F. L'élément 36 est ainsi un élément de décision qui fournit ledit code via un fil 19 à l'organe 16, de façon que ce dernier stoppe l'incrémentation des compteurs, c'est à dire l'autoadaptation des coefficients, lorsqu'une valeur de $y_k$ a été trouvée dans une des fenêtres. Une seule valeur de $y_k$ trouvée dans une des fenêtres suffit pour provoquer l'arrêt du processus, qui est ensuite maintenu arrêté jusqu'à ce qu'une valeur de $y_k$ soit à nouveau trouvée en dehors des fenêtres.

Par mesure de sécurité le coefficient principal du filtre est exclu du processus d'autoadaptation et maintenu à UN en permanence. Afin de diminuer l'erreur quadratique moyenne résiduelle en sortie, sans compliquer la gestion des coefficients, on peut avantageusement attribuer une dynamique deux fois plus forte, c'est à dire neuf bits, au coefficient principal, tout en laissant à huit bits la dynamique des coefficients latéraux; ceci est réalisable si l'amplitude de variation de ces derniers n'est pas supérieure à la moitié de l'amplitude du coefficient principal. Pour le type d'écho envisagé ici, cette hypothèse est réaliste.

Le filtre auto-adaptatif doit se comporter au départ, et au moins jusqu'à ce que la synchronisation de l'horloge ait été établie par le décodeur de signaux D2-MAC/paquet, comme un filtre passe-tout. Après que cette synchronisation ait été établie, un signal correspondant à la durée de la salve duobinaire (10,5 $\mu$S) est introduit sur une entrée 30, pour être fourni aux registres 29, 26 et à l'organe de gestion 16. A partir de ce signal, l'organe 16 active le processus d'autoadaptation pendant cette période (10,5 $\mu$S), puis l'arrête pendant le reste de la ligne de télévision (53,5 $\mu$s). Le signal 30 est aussi amené aux registres 26 et 29, pour mettre la sortie de l'un en état de haute impédance pendant que l'on utilise la sortie de l'autre et vice versa, de façon à choisir le signal filtré pendant la période de signal duobinaire et le signal non filtré pendant le reste de la ligne de télévision. Pendant ce reste de ligne on utilise un signal non filtré, car l'échantillonnage y est fait à 20,25 Mhz, alors que le fonctionnement du filtre est prévu à 10,125 Mhz, pour des raisons théoriques; moyennant quelques modifications, il pourrait néanmoins être envisagé de filtrer un échantillon sur deux des composantes MAC pendant ce reste de ligne, en laissant par conséquent alors le filtre toujours en service.

Lors de l'initialisation de l'égaliseur, tous les coefficients ont la valeur zéro dans les compteurs. Bien que le coefficient principal du filtre soit maintenu à UN en permanence, avec certains types de filtres numériques il est néanmoins nécessaire de l'initialiser. A cet effet, l'organe 16 de gestion est relié à un élément 20 qui, lors de l'initialisation, transfère la valeur UN depuis un registre vers le compteur qui correspond au coefficient principal. Avec d'autres types de filtre, on pourrait cabler définitivement à UN le coefficient principal.

Pour permettre un fonctionnement correct de ce filtre auto-adaptatif, il est utile de prévoir un circuit capable de détecter les coupures de l'alimentation, tels que ceux couramment utilisés dans les téléviseurs avec microprocesseurs, de façon à réinitialiser le processus d'auto-adaptation après une telle coupure.

Le présent dispositif pourrait aussi être utilisé avec des signaux de type DMAC ou à haute définition, moyennant toutefois quelques modifications.

## Revendications

1. Dispositif d'égalisation autoadaptative pour le traitement d'échantillons numériques codés par exemple en duobinaire et transmis par un canal quasi-stationnaire, comprenant un filtre numérique transversal, un circuit d'estimation de l'erreur en sortie du filtre, et un automate pour réaliser un processus d'autoadaptation des coefficients du filtre numérique, caractérisé en ce qu'il comporte en outre un élément de décision pour stopper le processus d'autoadaptation des coefficients lorsque la valeur des échantillons en sortie du dispositif est comprise dans une des fenêtres d'un ensemble de fenêtres prédéterminées.

2. Dispositif selon la revendication 1, caractérisé en ce qu'il est appliqué dans un système utilisant la norme D2-MAC.

3. Dispositif selon l'une des revendications 1 ou 2, caractérisé en ce que l'ensemble de fenêres se compose de trois fenêtres, l'une encadrant le niveau normal d'un échantillon zero, une autre encadrant le niveau normal d'un échantillon haut, et la troisième encadrant le niveau normal d'un échantillon bas.

4. Dispositif selon l'une quelconque des revendications précédentes, caractérisé en ce que la constatation qu'un seul échantillon est compris dans une desdites fenêtres est suffisante pour stopper le processus d'autoadaptation des coefficients.

5. Dispositif selon l'une quelconque des revendications précédentes, caractérisé en ce qu'il comporte des moyens pour activer le processus d'autoadaptation seulement pendant les périodes de signal numérique présentes au début de chaque ligne d'image.

6. Dispositif selon l'une quelconque des revendications précédentes, caractérisé en ce que le filtre est à huit coefficients.

7. Dispositif selon l'une quelconque des revendications précédentes, caractérisé en ce que le coefficient principal est le troisième.

8. Dispositif selon l'une quelconque des revendications précédentes, caractérisé en ce que le coefficient principal du filtre est défini par neuf bits et les autres par huit bits.

9. Dispositif selon l'une quelconque des revendications précédentes, caractérisé en ce qu'il comporte des moyens pour que, lors de l'initialisation du processus d'autoadaptation, le coefficient principal soit à un, et les autres à zéro.

10. Dispositif selon l'une quelconque des revendications précédentes, caractérisé en ce qu'il est muni de moyens pour court-circuiter le filtre pendant les périodes de multiplex temporel qui suivent les périodes de signal duobinaire.

11. Dispositif selon l'une quelconque des revendications précédentes, dans lequel l'automate qui réalise l'autoadaptation additionne ou soustrait à chacun des coefficients du filtre une quantité égale à une puissance négative de deux, caractérisé en ce que cet automate comporte cet effet, pour chacun des coefficients à adapter, un compteur dont la capacité exprimée en bits est égale au nombre de bits de quantification des ccefficients du filtre, et en ce que l'addition/soustraction est réalisée en incrémentant/décrémentant le chiffre de comptage dudit compteur.

12. Dispositif selon l'une quelconque des revendications précédentes, caractérisé en ce que le susdit élément de décision est essentiellement constitué d'une mémoire morte dite PROM à laquelle le signal filtré numérique est fourni en tant qu'adresse, et qui contient à chacune des adresses possibles une valeur numérique exprimant la décision correspondante.

13. Dispositif selon l'une quelconque des revendications précédentes, dans lequel les échantillons numériques sont introduits au rythme de 20,25 Mhz, caractérisé en ce qu'il est muni de moyens pour traiter un échantillon sur deux pendant les périodes de signal duobinaire, et en ce que le processus d'autoadaptation et le filtrage proprement dit sont réalisés avec une fréquence d'horloge de 10,125 Mhz.

14. Dispositif selon l'une quelconque des revendications précédentes, caractérisé en ce qu'il est réalisé sous une forme intégrée.

FIG.1

FIG.2

FIG.3

FIG.4

FIG.5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | EP-A-0 169 093 (CNET-TDF) * page 3, ligne 32 - page 4, ligne 34; page 9, lignes 19-25; page 12, lignes 10-15; page 17, ligne 20 - page 18, ligne 23 * | 1 | H 04 N 11/08 H 04 N 7/00 |
| A | | 2,3,5 | |
| D,Y | IEEE TRANSACTIONS ON COMMUNICATION TECHNOLOGY vol. 18, no. 5, octobre 1970, pages 625-632; A. LENDER et al.: "Decision-Directed Digital Adaptive Equalization Technique for High-Speed Data Transmission" * page 625, colonne 1 - page 626, colonne 1; page 629, colonne 1, ligne 42 - colonne 2, ligne 8 * | 1 | |
| A | idem | 14 | |
| A | EP-A-0 308 776 (NIPPON HOSO KYOKAI) * colonne 3, ligne 30 - colonne 7, ligne 16 * | 1,6,10, 12 | **DOMAINES TECHNIQUES RECHERCHES (Int. Cl.5)** H 04 N 7/00 H 04 N 11/00 H 04 N 5/00 H 03 H 21/00 |

Le présent rapport a été établi pour toutes les revendications

| Lieu de la recherche | Date d'achèvement de la recherche | Examinateur |
|---|---|---|
| BERLIN | 17-09-1990 | MATERNE A G |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)